# EUROPÄISCHE PATENTSCHRIFT

(11) **EP 2 047 488 B1**
(45) Veröffentlichungstag und Bekanntmachung des Hinweises auf die Patenterteilung: **09.08.2017**
(21) Anmeldenummer: 07764979.6
(22) Anmeldetag: 30.06.2007
(51) Int. Cl.: H01F 5/00, H01F 7/16, H02K 7/102, H02P 3/04, H01F 7/18, H01F 29/02, H01F 5/04

(54) **SPULE, ANSTEUERUNG, KONTAKTIERUNG UND VERFAHREN**
COIL, CONTROL SYSTEM, CONTACTING SYSTEM AND METHOD
BOBINE, COMMANDE ET PROCÉDÉ CORRESPONDANT

(30) Priorität: 20.07.2006 DE 102006034049
(43) Veröffentlichungstag der Anmeldung: 15.04.2009
(73) Patentinhaber: SEW-EURODRIVE GmbH & Co. KG, 76646 Bruchsal (DE)
(72) Erfinder: HEINRICH, Pascal, 67480 Roeschwoog (FR)
(86) Internationale Anmeldenummer: PCT/EP2007/005819
(87) Internationale Veröffentlichungsnummer: WO 2008/009349

(56) Entgegenhaltungen:
- EP-A- 1 243 789
- DE-A1- 3 613 294
- DE-B3-102004 022 254
- US-A- 3 708 682

## Beschreibung

Die Erfindung betrifft eine Spule, eine Ansteuerung, eine Kontaktierung und ein Verfahren, insbesondere für elektromagnetisch betätigbare Bremsen oder Kupplungen.

Aus der DE 36 13 294 C2 ist eine Bremsspule bekannt, die als Bremse für einen Elektromotor verwendbar ist. Zur Erhöhung der Dynamik der Bremse ist die Bremsspule dort zweigeteilt vorgesehen, wobei der erste Teil der Spulenwicklung als Beschleunigungsspule bezeichnet wird. Zum Lüften der Federdruckbremse wird zuerst kurzzeitig die Beschleunigungsspule mit hohem Stromwerten beaufschlagt zur Erzeugung von Anzugsmoment, um die träge Ankerscheibe vom Bremsbelag zu trennen. Dabei wird in der Beschleunigungsspule in einem kurzen Anfangszeitintervall ein derart hoher Stromwert erreicht, dass bei dauerhaftem Auftreten dieses Stromwertes eine Zerstörung der Spule zu erwarten wäre. Während des Betriebes des Motors nach dem Anfangszeitintervall wird der Luftspalt der Bremse durch die gesamte Bremsspule, die auch als Haltespule bezeichnet wird, aufrecht erhalten. Nachteilig ist dabei, dass die Fertigung einer geteilten Spule wegen des hierfür notwendigen Mittelabgriffs aufwendig und kostspielig ist.

Aus der DE 10 2004 022 254 B3 ist der Aufbau einer Spule aus Spulenträger, Wicklungsdraht und Kontaktierungselementen bekannt. Die Verbindung von Abgriffen des Wicklungsdrahtes wird über die Kontaktierungselemente, die dort als Hülse bezeichnet werden, realisiert, was die Fertigung der Spule vereinfacht.

**Aus der** US 3 708 682 A **ist eine Spule mit zwei verschiedenen Wicklungsdrahtdurchmessern bekannt, wobei die Spule zwei Teilwicklungen und zugehörige Abgriffe umfasst, wobei eine erste Teilwicklung einen Wicklungsdraht mit erstem Drahtdurchmesser und eine zweite Teilwicklung einen Wicklungsdraht mit einem anderen Drahtdurchmesser umfasst.**

Der Erfindung liegt die Aufgabe zugrunde, ein schnelles und verlustarmes Lüften einer elektromagnetisch betätigbaren Bremse oder Kupplung zu erreichen.

Erfindungsgemäß wird die Aufgabe bei der Spule nach den in Anspruch 1 und bei dem Verfahren nach den in Anspruch 10 angegebenen Merkmalen gelöst.

Wichtige Merkmale der Erfindung bei der Spule sind, dass sie zumindest einen Spulenträger und einen in mehrere Abschnitte gegliederten Wicklungsdraht umfasst, insbesondere einen zur elektrischen Isolierung lackierten Wicklungsdraht, wobei eine erste Teilwicklung einen Wicklungsdraht mit erstem Drahtdurchmesser und eine zweite Teilwicklung einen Wicklungsdraht mit einem anderen Drahtdurchmesser umfasst.

***Von Vorteil ist dabei, dass bei der Herstellung der Spule auf den Spulenträger zwei oder mehrere Wicklungen mit unterschiedlichen Wickeldrahtdurchmessern gewickelt werden, deren Enden beim Bewickeln an den Kontaktierungselementen anklemmbar sind. Die Verdrahtung der Spule ist mit Verbindungsstücken und*/*oder Mittelabgriffen an den Kontaktierungselementen durchführbar. Insbesondere ist für diese Verdrahtung ist Litzendraht verwendbar.***

Ein weiterer Vorteil ist dabei, dass mehrteilige Spulen derart ausbildbar sind, dass sie kostengünstiger und einfacher fertigbar sind. Die Enden der Wicklungsdrähte sind verbindbar mit Anschlussdrähten, insbesondere mittels der Kontaktierungselemente.

Vorteiligerweise ist die Erfindung anwendbar bei Wicklungs- und Anschlussdrähten mit verschiedener Ausführung der jeweiligen Querschnittsfläche. Dabei sind auch Ausführungen mit drei-, vier- oder vieleckigen Querschnittsflächen umfasst. Die Verwendung von runden Drähten ist selbstverständlich kostengünstig.

Vorteiligerweise sind die Querschnittsgeometrieen der Wickeldrähte dahingehend wählbar, dass die Anforderungen an das magnetische Anzugsmoment und die thermische Belastung der gesamten Spule aufeinander abstimmbar sind.

***Ein weiterer Vorteil der Erfindung ist, dass die Kontaktierung über Kontaktierungselemente eine kostengünstige elektrische Verbindungsart ermöglicht. Insbesondere sind die Kontaktierungselemente selbst als kostengünstige Stanz-Biegeteile aus Blech herstellbar. Da sie verformbare Bereiche aufweisen, sind mittels dieser Bereiche Wicklungsdraht-Abschnitte oder Litzen-Abschnitte einklemmbar, also kraftschlüssig verbindbar. Mittels eines Widerstandsschweißverfahrens sind zwischen den Wicklungs- bzw. Anschlussdrähten und dem Kontaktierungselement stoffschlüssige Verbindungen herstellbar.***

Bei einer vorteilhaften Ausgestaltung der Erfindung weist die Spule mehrere Teilwicklungen auf, wobei mindestens eine Teilwicklung die Funktion einer Beschleunigungsspule übernimmt. Diese Teilspulen bestehen aus Wickeldrähten unterschiedlicher Drahtdurchmesser, wobei die Beschleunigungsspulen mit Wicklungsdraht größeren Durchmessers gewickelt sind. Die Haltespule, die den gelüfteten Zustand aufrechterhält, wird durch eine Reihenschaltung aller Teilspulen dargestellt. Die Verdrahtung mittels der Kontaktierungselemente ist derart ausführbar, dass die Teilspulen durch Verbindungsdraht verbindbar sind und Zwischenabgriffe durch Litzendraht der Bremsen- oder Kupplungsansteuerung zuführbar sind.

Bei einer weiteren vorteilhaften Ausgestaltung ist die Spule zweigeteilt und der Zwischenabgriff als Mittelabgriff herausgeführt. Die Spule setzt sich hierfür aus einer Beschleunigerspule, die mit hohem Strom aktivierbar ist, und einer dazu in Reihe geschalteten weiteren Spule zusammen, wobei beide Teilspulen zusammen die Haltespule darstellen.

Bei einer weiteren vorteilhaften Ausgestaltung werden mehrere Teilspulen auf einen gemeinsamen Spulenträger gewickelt. Der Spulenträger muss hierzu geeignet dimensioniert sein. Einfluss auf die Geometrie haben der Spulendurchmesser, die Wicklungsdrähte und die Ableitung der entstehenden Wärme, die zum Schutz der Spule über in die Wicklungen eingebrachte Vergussmasse und ein Gehäuse an die Umgebung abführbar ist. Das Gehäuse ist vorteiligerweise das Statorgehäuse eines Elektromotors.

Bei einer weiteren vorteilhaften Ausgestaltung werden die Spulen auf einen Spulenträger gewickelt, der Aufnahmen von Kontaktierungselementen aufweist. Somit sind vorteiligerweise kein separates Befestigungselement und zugehörige Verbindungen vorzusehen. Die Aufnahmen sind also einstückig am Spulenträger ausführbar. Bei Spulen, die aus mehreren Teilwicklungen bestehen, müssen ausreichend Ausnehmungen für die Kontaktierungselemente vorgesehen sein, wobei für jede Teilwicklung mindestens zwei Kontaktierungselemente vorzusehen sind.

Bei einer weiteren vorteilhaften Ausgestaltung weisen die Kontaktierungselemente mehrere Widerhaken zum Verkrallen in den Aufnahmen des Spulenträgers auf. Diese Widerhaken sind hintereinander anordenbar. Bei der Montage des Kontaktierungselements wird das Kontaktierungselement teilweise in die jeweilige Ausnehmung des Spulenträgers eingeschoben, sodass die Kontaktierungselemente während eines ersten Montageschritts in einer ersten Einschubtiefe fixierbar sind und nach einem weiteren Montageschritt in einer zweiten Einschubtiefe fixierbar sind. Somit ist also vor dem ersten Montageschritt ein Vorkonfektionieren und danach ein Verbinden des Wicklungsdrahtes mit dem Kontaktierungselement ermöglicht. In einem letzten Montageschritt ist ein weiteres abschließendes Einschieben in den Spulenträger ausführbar.

Bei einer weiteren vorteilhaften Ausgestaltung weist der Spulenträger Aufnahmen für zusätzliche Kontaktierungselemente auf, die vorteiligerweise zur mechanischen Zugentlastung der angeschlossenen Litze dienen.

Bei einer weiteren vorteilhaften Ausgestaltung weist der Spulenträger Führungen für die angeschlossenen Litzendrähte auf. Von Vorteil ist dabei, dass die Übersichtlichkeit und Einfachheit beim Herstellen verbessert ist.

Diese Führungen laufen vorteiligerweise an einer zentralen Stelle zusammen, an der die Anschlussdrähte in einer Halterung befestigbar sind. Dabei ist vorteilhaft, dass nur ein einziger Anschlussstrang, umfassend die Anschlussdrähte, notwendig ist und die Übersichtlichkeit erhöht ist.

Bei einer weiteren vorteilhaften Ausgestaltung sind Schweißverbindungen, zum stoffschlüssigen Verbinden von Draht und Kontaktierungselement, durch entsprechendes Erhitzen der Kontaktierungselemente herstellbar. Das Erhitzen der Kontaktierungselemente erfolgt durch kostengünstiges und einfach auszuführendes Widerstandsschweißverfahren.

Bei einer weiteren vorteilhaften Ausgestaltung sind Verbindungs- und Anschlussdrähte durch gleichwertige elektrisch leitfähige Verbindungs- und Anschlusselemente ersetzbar. Somit sind kostengünstige Stanz-Biegeteile oder Blechteile verwendbar.

Bei einer weiteren vorteilhaften Ausgestaltung sind die Kontaktierungselemente mit den Anschluss- und Verbindungselementen vorkonfektionierbar. Somit ist eine schnellere und einfachere Montage ermöglicht.

Wichtige Merkmale bei dem Verfahren nach Anspruch 10 sind, dass es zur Herstellung einer Spule vorgesehen ist, wobei
- in einem ersten Schritt die Kontaktierungselemente mit Anschlussdrähten und Verbindungselementen vorkonfektioniert werden;
- in einem zweiten Schritt die Kontaktierungselemente in den Spulenträger eingefügt werden;
- in einem dritten Schritt die Spulenteilwicklungen auf den Spulenträger gewickelt werden;
- in einem vierten Schritt die Enden der Wicklungsdrähte mit den Kontaktierungselementen verbunden werden, insbesondere verschweißt;
- in einem fünften Schritt die Anschlussdrähte als Kabelstrang aus der Spule herausgeführt werden.

Von Vorteil ist dabei, dass durch die Vorkonfektionierung weniger Teile im Endmontagebereich notwendig sind. Außerdem sind somit Fehler beim Verdrahten reduzierbar. Darüber hinaus müssen die Kontaktierungselemente nur in den Spulenträger selbst und nicht in ein Zwischenteil eingefügt werden. Das Wickeln ist dann ungestört ausführbar und zum Abschluss des Wickelns sind die Endbereiche des Wicklungsdrahtes an die Kontaktierungselemente einfach und ohne Aufwand verbindbar. Das Verschweißen ist sehr schnell und mit geringem Aufwand ausführbar, wobei auch eine hohe Qualität erreichbar ist.

Außerdem ist das Fertigen auf einer einzigen Maschine ausführbar, so dass nur eine einzige Aufspannung des Werkstücks notwendig ist.

Bei einer weiteren vorteilhaften Ausgestaltung sind die Teilspulen mittels einer elektronischen Steuerung schaltbar. Vorteiligerweise ist dabei ein getrenntes Ansteuern der Teilspulen ausführbar. Somit sind in verschiedenen Zeitbereichen verschiedene Funktionen von den Teilspulen übernehmbar.

Bei einer weiteren vorteilhaften Ausgestaltung sind innerhalb elektronischen Steuerung Mittel zur Bestimmung des zeitlichen Verlaufs von Strom und Spannung in den einzelnen Teilspulen vorsehbar. Somit ist vorteiligerweise eine Regelung für jede Teilspule ausführbar.

Bei einer weiteren vorteilhaften Ausgestaltung sind Mittel zur Erfassung von Spulenstrom und -Spannung. Vorteil ist dabei, dass eine Ermittlung von Verschleiß eines Reibbelages in der Bremse oder Kupplung einsetzbar ist.

Da der Verschleiß des Reibbelages zu einer Veränderung der Geometrie des Reibbereiches in der Bremse oder Kupplung führt, sind in einer weiteren vorteilhaften Ausgestaltung Mittel vorsehbar. Vorteiligerweise sind anhand der gemessenen Strom und Spannungsdaten der Schaltzeitpunkte der Teilspulen steuer- und /oder regelbar sind. Insbesondere sind also die Zeitpunkte abhängig vom Abnutzungszustand der Reib- oder Bremsbeläge derart verschiebbar, dass die Bremse trotzdem schnell aktivierbar ist.

Bei einer weiteren vorteilhaften Ausgestaltung ist der Verschleiß, bei Erreichen eines Schwellenwertes, nach außen mitteilbar, insbesondere über ein Warnsignal.

Bei einer weiteren vorteilhaften Ausgestaltung ist Mitteilung dieses Alarmsignals über eine elektronische Schaltung durchführbar, die über ein Bussystem mit einem übergeordneten Busteilnehmer kommuniziert.

Wichtige Merkmale bei dem Verfahren nach Anspruch 38 sind, dass es zum Betreiben einer Spule einer Bremse oder Kupplung, umfassend Teilwicklungen, wobei in mindestens einem ersten Zeitabschnitt mindestens eine erste Teilwicklung bestromt wird und in einem letzten Zeitabschnitt eine Reihenschaltung der gesamten Teilwicklungen bestromt wird. Von Vorteil ist dabei, dass eine mehrteilige Spule verwendbar ist und derart steuerbar ist, dass die Funktion der Beschleunigungsspule in nacheinander folgenden Zeitabschnitten auf den ansteigenden Strom anpassbar ist. Die Funktion des Haltens wird von der höchsten Induktivität ausgeführt.

Bei einer weiteren vorteilhaften Ausgestaltung wird beim Übergang von einem Zeitabschnitt zum nächsten Zeitabschnitt der im Zeitabschnitt bestromten Reihenschaltung von Teilwicklungen eine nächste Teilwicklung in Reihe hinzugeschaltet. Von Vorteil ist dabei, dass die Induktivität in den aufeinander folgenden Zeitabschnitten schrittweise erhöhbar ist. Somit kann der Strom anfangs schnell große Werte erreichen, dann aber rechtzeitig die Induktivität erhöht werden, um ein Durchschmelzen des Wicklungsdrahtes zu verhindern.

Bei einer weiteren vorteilhaften Ausgestaltung weisen zumindest zwei der Teilwicklungen verschiedene Wicklungsdrahtdurchmesser auf. Insbesondere wird im letzten Zeitabschnitt der für den kleinsten Wicklungsdrahtdurchmesser der gesamten in Reihe geschalteten Teilwicklungen maximal zulässige Strom vorgesehen. Von Vorteil ist dabei, dass der Drahtdurchmesser an die Ströme anpassbar ist, insbesondere im ersten Zeitabschnitt ein noch höherer Strom erreichbar ist, für den höhere Werte erlaubt sind als beim Halten erlaubt sind. Der beim Halten zulässige Strom ist auch bestimmt vom Durchmesser des Wicklungsdrahtes der letzten Teilwicklung.

Bei einer weiteren vorteilhaften Ausgestaltung wird von einem Zeitabschnitt in den nächsten Zeitabschnitt übergegangen, wenn der für den kleinsten Wicklungsdrahtdurchmesser der Teilwicklungen der Reihenschaltung maximal zulässige Strom erreicht wird. Von Vorteil ist dabei, dass ein großer Schutz für die Teilwicklungen ermöglicht ist.

Bei einer weiteren vorteilhaften Ausgestaltung ist die Summe vom ersten bis zum vorletzten Zeitabschnitt kleiner als die Zeitdauer, welche für das Aufmagnetisieren des Rotors des als Asynchronmotor ausgeführten Elektromotors benötigt wird, wobei der Elektromotor mit der Bremse oder Kupplung verbunden ist. Von Vorteil ist dabei, dass die Vorrichtung bei Hubwerken einsetzbar ist.

Wichtige Merkmale bei der elektromagnetisch betätigbare Bremse oder Kupplung sind, dass als Brems- oder Kupplungsspule eine vorbeschriebene Spule ausgeführt ist, wobei die Teilwicklungen mit verschieden großen Strömen beaufschlagbar sind. Von Vorteil ist dabei, dass ein besonders schnelles Lüften ermöglicht ist.

Wichtige Merkmale bei dem Antrieb sind, dass er einen Elektromotor umfasst, wobei eine vorbeschriebene Spule umfasst ist. Von Vorteil ist dabei, dass die Bremse mit der Spule anpassbar ist an die Aufmagnetisierungszeit des Rotors des Elektromotors.

Bei einer weiteren vorteilhaften Ausgestaltung wird die Wärme der Lüftspule über ein Lagerschild oder Gehäuseteil des Motors an die Umgebung abgeführt. Insbesondere ist die Bremse im Elektromotor integriert vorgesehen. Von Vorteil ist dabei, dass ein kompakter Antrieb mit geringem Raumbedarf ausführbar ist.
Weitere Vorteile ergeben sich aus den Unteransprüchen.

Die Erfindung wird nun anhand von Abbildungen näher erläutert:
Figur 1 zeigt einen Spulenträger für eine geteilte Spule mit der erfindungsgemäßen Verdrahtung.
Figur 2 zeigt das Schaltbild der erfindungsgemäßen Spule.
Figur 3 zeigt einen Spulenträger und die Kontaktierungselemente.
Figuren 4a und b zeigen das Kontaktierungselement in verschiedenen Zuständen.
Figuren 5a bis c stellen das Verfahren zur Verdrahtung der Spule dar.

Die Erfindung betrifft eine Bremse oder Kupplung, die auf dem Prinzip des Kraftschlusses beruht. Die Bremse oder Kupplung ist als Federkraftbremse oder -kupplung eines Elektromotors mit Lüftspule ausgeführt. Somit ist die Bremse oder Kupplung elektromagnetisch betätigbar.

Solche Vorrichtungen weisen wenigstens ein rotatorisch um eine Achse drehbar vorgesehenes Element mit korrespondierenden Gegenelementen auf, wobei ein erstes Gegenelement axial fixiert und ein weiteres axial bewegbar ist, wobei dieses weitere Gegenelement durch Federkraft bewegbar und durch Elektromagnetkraft steuerbar ist. Somit ist in einer ersten axialen Position des weiteren Gegenelementes ein freies Drehen des drehbaren Elementes ermöglicht, in einer zweiten axialen Position ist Kraftschluss zwischen dem drehbaren Element und den Gegenelementen einleitbar. Bei einer Bremse wird in dieser Position also Bremskraft erzeugt, bei einer Kupplung die Kupplungsverbindung hergestellt. Im eingefallenen Zustand werden beide Elemente beispielsweise durch Federkraft, insbesondere axial gerichtete, zusammengepresst. Um eine Aufhebung des Kraftschlusses zu erreichen, werden die Elemente durch eine elektromagnetische Gegenkraft gelüftet, die durch die Lüftspule erzeugt ist, also in die erste Position gebracht.

Die Lüftspule umfasst einen Spulenträger. Dieser Spulenträger ist zur besseren Wärmeleitung mit einer Vergussmasse vergossen. In der ersten Position, der gelüfteten, in der ohmsche Wärme entsteht, nimmt das Gehäuse die Wärme der Lüftspule auf.

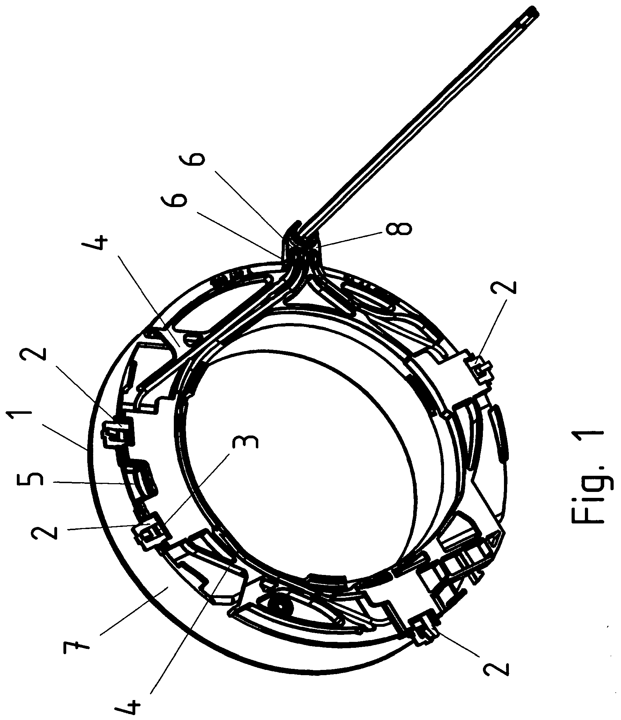

In der Figur 1 ist ein Spulenträger 1 gezeigt, wie er für die Erfindung vorgesehen ist. Er ist vorteiligerweise als Kunststoff-Spritzgussteil fertigbar. In der Wandung des Spulenträgers sind Ausnehmungen 3 zur Aufnahme der Kontaktierungselemente 2 vorgesehen. Die Spule ist in Teilwicklungen aufgeteilt. Je nach Ausgestaltung der aufgeteilten Spule sind an ihrem Umfang mindestens vier dieser Ausnehmungen 3 mit den zugehörigen Kontaktierungselementen 2 vorgesehen, um jeweils die beiden Enden der Wicklungsdrähte aufzunehmen. Weiter weist der Spulenträger 1 Führungen 4 auf, in denen die Wicklungs- und Anschlussdrähte führbar sind. Am Umfang des Spulenträgers 1 sind mehrere Kontaktierungselemente 2 einbringbar, wobei in der Figur 1 vier Kontaktierungselemente 2 dargestellt sind. An den Kontaktierungselementen 2 sind an den Zungen 21 die Anschlussdrähte 6 zum Anschluss an die Steuerung und der Verbindungsdraht 5 befestigt.

Die mit den Anschlussdrähten vorkonfektionierten Kontaktierungselemente 2 befinden sich noch teilweise außerhalb des Spulenträgers 1. In einem späteren Montageschritt werden diese vollständig in den Spulenträger 1 eingesteckt.

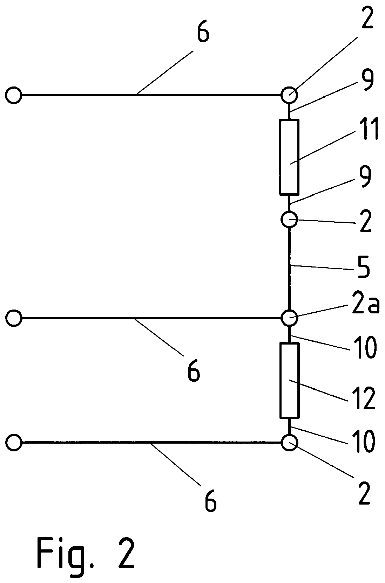

In der Figur 2 ist das Ersatzschaltbild für den Fall einer zweigeteilten Lüftspule gezeigt. Die Wicklungsdrähte 9 und 10 mit den Drahtdurchmessern A und B der Teilspulen 11 und 12 sind mit den Kontaktierungselementen 2 beziehungsweise 2a verbunden. Die beiden Teilspulen sind durch den Verbindungsdraht 5 miteinander verbunden. Zum Anschluss an die Ansteuerung dienen die Anschlussdrähte 6, wobei der mittlere Anschlussdraht den Mittelabgriff am Kontaktierungselement 2a herausführt. Die freien Enden der Anschlussdrähte 6 werden der elektronischen Steuerung zugeführt.

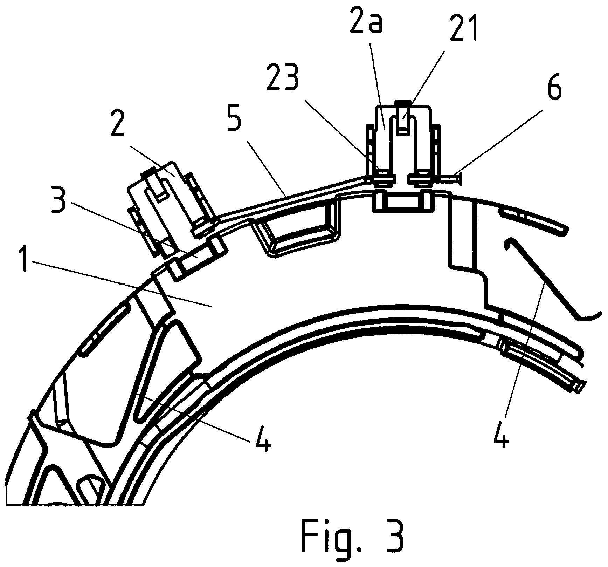

In Figur 3 ist der Ausschnitt des Spulenträgers 1 mit zwei benachbarten Kontaktierungselementen 2 in Draufsicht dargestellt. Die Spule ist noch nicht bewickelt. Die mit dem Verbindungsdraht 5 vorkonfektionierten Kontaktierungselemente (2, 2a) befinden sich außerhalb des Spulenträgers 1. Der Anschlussdraht 6 und der Verbindungsdraht 5 sind an den unteren Endbereichen des Kontaktierungselements 23 angeschweißt. Die Zungen 21 der Kontaktierungselemente 2 sind noch nicht belegt und geöffnet.

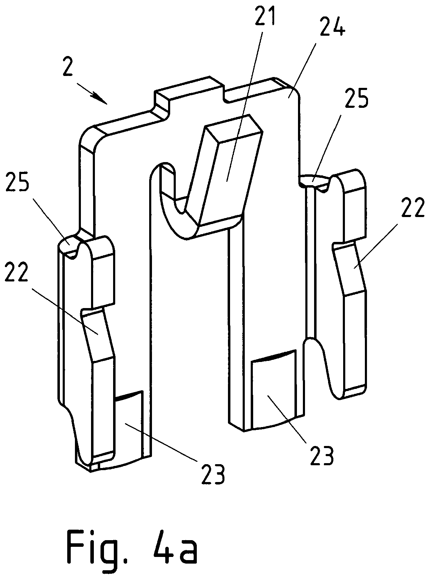

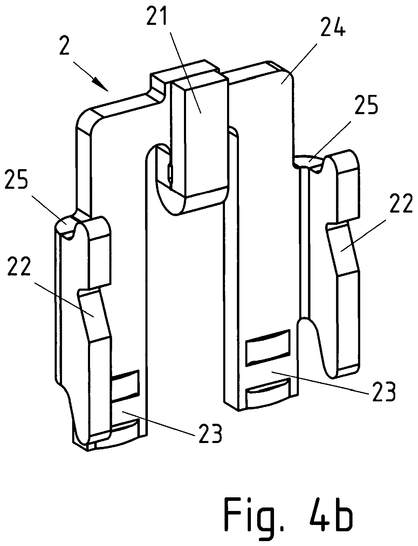

In den Figuren 4a und 4b ist das Kontaktierungselement 2 gezeigt. Bei dem Kontaktierungselement handelt es sich um ein gebogenes Stanzblechteil.

Das Kontaktierungselement in der Figur 4 a weist einen Wandteil 24 auf. Am oberen Endbereich befindet sich eine Zunge 21 zur Aufnahme des Wicklungsdrahtes. Die Zunge 21 ist elastisch verformbar. In der dargestellten Form ist die Zunge 21 noch im geöffneten Zustand. Zur korrekten Lagerung und zur sicheren Zuführung des Wicklungsdrahtes zur Zunge 21 dient die Drahtführung 25.

Am unteren Endbereich des Kontaktierungselements befinden sich die Aufnahmen 23 für die Anschluss- und Verbindungsdrähte 6 bzw. 5. Eine stoffschlüssige Verbindung der Drähte 5 und 6 an die Aufnahmen 23 erfolgt durch Verschweißen.

Zur Fixierung der Kontaktierungselemente im Spulenträger 1 dienen die Widerhaken 22, die sich in das Kunststoffteil verkrallen.

Das Kontaktierungselement der Figur 4b zeigt die Zunge 21 im geschlossenen Zustand, wobei die eingeklemmten oder angeschweißten Drähte nicht dargestellt sind.

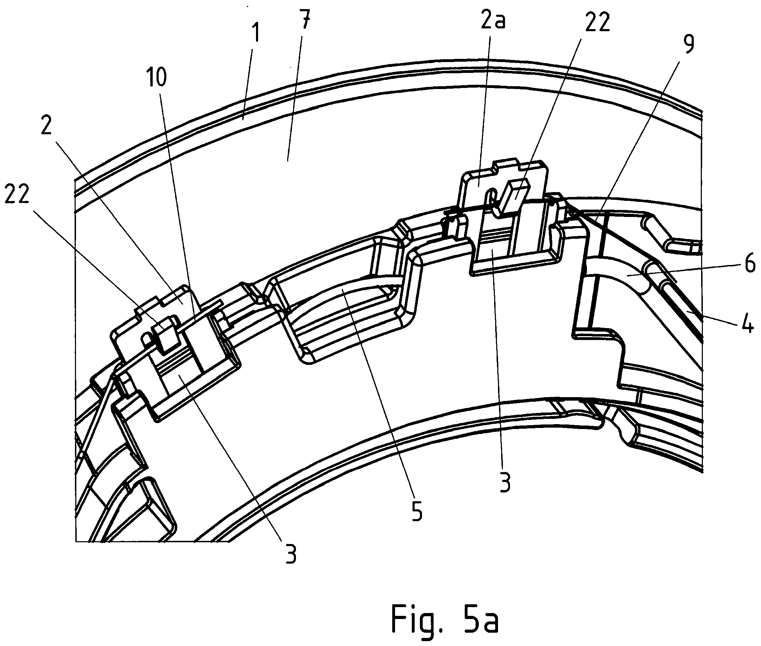

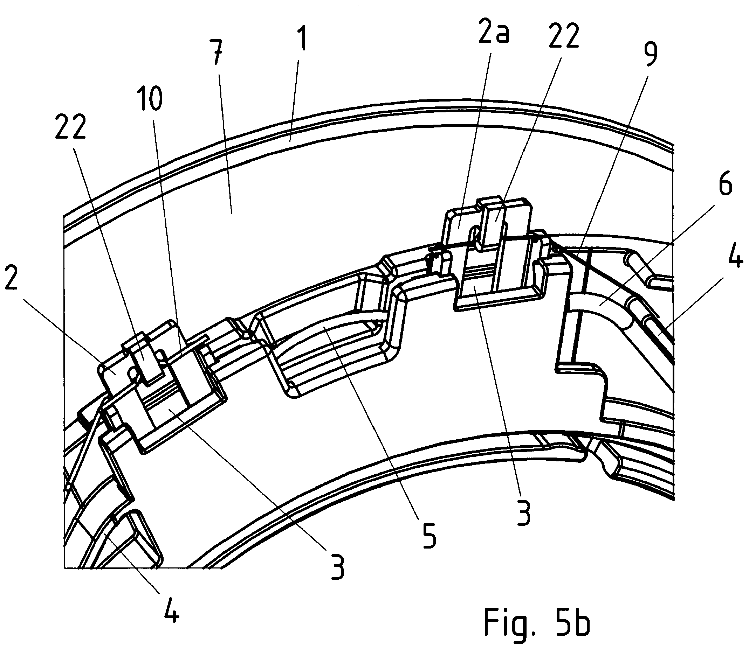

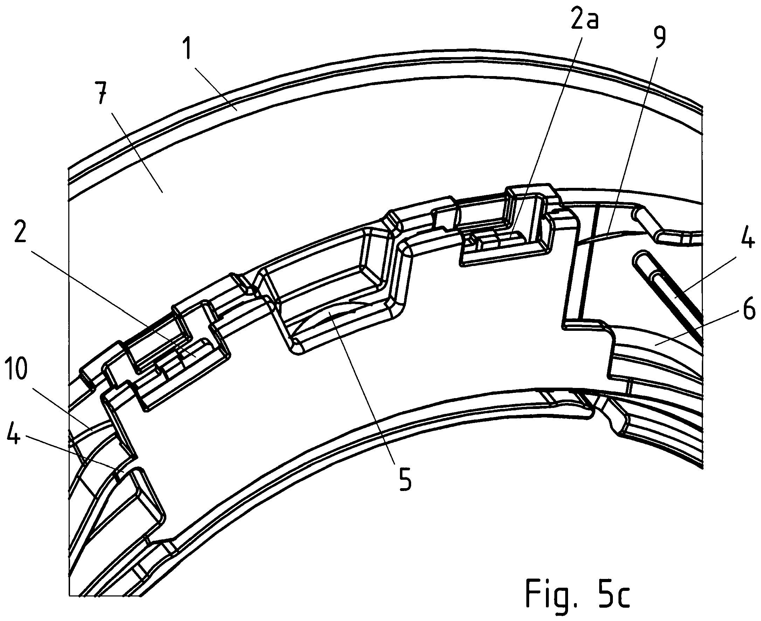

In den Figuren 5a, 5b und 5c ist die Anordnung und das Verfahren für die Verdrahtung für einen Mittelabgriff bei einer geteilten Spule dargestellt.

Die Figur 5 a zeigt einen ersten Fertigungsschritt beim Herstellen der geteilten Spule. Die Teilspulen bestehend aus den Wicklungsdrähten 9, 10 sind konzentrisch auf den Spulenträger 1 gewickelt. Die Drahtenden sind an den vorgesehenen Führungen 4 entlang geführt.

Die Kontaktierungselemente 2 und 2a sind teilweise in den Spulenträger 1 eingeführt. Der Anschlussdraht 6 und der Verbindungsdraht 5 werden schon vorab an die beiden Kontaktierungselemente geschweißt, um eine feste stoffschlüssige Verbindung zu erhalten.

Die Enden der Wicklungsdrähte 9 und 10 werden über die Drahtführung 25 in der Zunge 21 abgelegt. Der Wicklungsdraht 9 und der Anschlussdraht 6 sind durch die Führung 4 voneinander getrennt.

Die Abbildung zeigt die unterschiedlichen Drahtdurchmesser der beiden Wicklungsdrähte, sowie der Anschlussdrähte. Da die Anschlüsse sämtlich separat erfolgen, ist für den Draht 9 und 10 jeweils ein unterschiedlicher Drahtdurchmesser vorsehbar.

Figur 5b zeigt den zweiten Schritt, bei dem die Wicklungsdrähte 9 und 10 mit den Zungen 21 fest verbunden werden.

Bei weiteren erfindungsgemäßen Ausführungsbeispielen ist eine stoffschlüssige Verbindung der Anschlüsse durch Verschweißen herstellbar.

Figur 5c zeigt den den Mittelabgriff umfassenden Ausschnitt der fertig kontaktierten Spule. Die Kontaktierungselemente 2 und 2a sind komplett in den Spulenträger 1 eingebracht. Die einzelnen Kabel liegen voneinander isoliert in den jeweiligen als Aufnahmen wirkenden Führungen 4. Durch die Art der Kontaktierung wie sie am Kontaktierungselement 2a vorgenommen wurde, wird der Mittelabgriff der Spule realisiert. Dabei weist das Kontaktierungselement 2a drei elektrische Verbindungsstellen auf, nämlich eine erste für den Wicklungsdraht 9 und eine zweite für den Verbindungsdraht 5 und eine dritte für den Anschlussdraht 6 des Mittelabgriffs. Die zweite und dritte sind also an zwei unteren Endbereichen des Kontaktierungselements vorgesehen und sind in der Lage, Drähte mit größerem Durchmesser als dem Durchmesser des Wicklungsdrahtes 9 aufzunehmen.

Die Anschlussdrähte 6 werden, wie in Figur 1 gezeigt, in dafür vorgesehene Kanäle verlegt, in der Halterung 8 gesammelt und somit für die weitere Montage der Spule als Anschlussstrang zur Verfügung gestellt.

Bei weiteren erfindungsgemäßen Ausführungsbeispielen sind die Anschlussdrähte als Litzendrähte oder dicke Einzeldrähte ausgeführt.

Bei weiteren erfindungsgemäßen Ausführungsbeispielen ist die Halterung 8 einstückig mit dem Spulenträger 1 ausgeführt.

Bei weiteren erfindungsgemäßen Ausführungsbeispielen sind zweite und dritte Verbindungsstelle als Endbereiche ausführbar, die elastisch verbiegbare Zungen umfassen. Somit sind die Drähte kraftschlüssig einklemmbar und zusätzlich mit Schweißverbindung verbindbar.

Bei weiteren erfindungsgemäßen Ausführungsbeispielen ist eine Bremse nach Figur 1 mit zugehöriger Beschreibung der DE 36 13 294 C2 ausgeführt, wobei der oben beschriebene Spulenträger eingesetzt ist.

Bei weiteren erfindungsgemäßen Ausführungsbeispielen ist statt des Kontaktierungselements nach Figur 4a und 4b ein Kontaktierungselement der in DE 10 2004 022 254 B3 offenbarten Ausführungsbeispielen, gemäß den dort gezeigten Figuren samt zugehörigem Beschreibungsteil verwendet.

### Bezugszeichenliste

- 1: Spulenträger
- 2: Kontaktierungselement
- 2 a: Kontaktierungselement
- 3: Ausnehmung für Kontaktierungselement
- 4: Drahtführung
- 5: Verbindungsdraht
- 6: Anschlussdraht
- 7: Wickelbereich
- 8: Halterung
- 9: Wicklungsdraht mit Durchmesser A
- 10: Wicklungsdraht mit Durchmesser B
- 11: Spule mit Wicklungsdraht mit Durchmesser A
- 12: Spule mit Wicklungsdraht mit Durchmesser B
- 21: Zunge für Wicklungsdraht
- 22: Widerhaken
- 23: Ablage für Anschlussdraht
- 24: Wandteil
- 25: Drahtführung

## Patentansprüche

1. Spule (11, 12), insbesondere für eine elektromagnetisch betätigbare Bremse oder Kupplung,
wobei die Spule (11, 12) zwei oder mehr Teilwicklungen (11, 12) und zugehörige Abgriffe umfasst,
wobei
eine erste Teilwicklung (11) einen Wicklungsdraht mit erstem Drahtdurchmesser und eine zweite Teilwicklung (12) einen Wicklungsdraht mit einem anderen Drahtdurchmesser umfasst,
**dadurch gekennzeichnet, dass**
ein erster Abgriff (2, 2a) ein erstes Kontaktierungselement (2a) umfasst, an dem ein Ende des Wicklungsdrahtes (10) der zugehörigen Teilwicklung (12) und ein Ende eines zugehörigen Anschlussdrahtes (6) und ein Ende eines aus Litzendraht hergestelltem Verbindungsdrahtes (5) verbunden ist,
wobei der erste Abgriff (2, 2a) (2, 2a) zweites Kontaktierungselement (2) umfasst, an dem ein anderes Ende des Verbindungsdrahtes (5) und ein Ende des Wicklungsdrahtes (9) einer anderen Teilwicklung (11) verbunden ist.

2. Spule (11, 12) nach Anspruch 1,
**dadurch gekennzeichnet, dass**
die Teilwicklungen über eine Steuerelektronik zeitlich versetzt nacheinander hinzuschaltbar ist.

3. Spule (11, 12) nach mindestens einem der vorangegangenen Ansprüche,
**dadurch gekennzeichnet, dass**
Teilwicklungen mit den größeren Wicklungsdrahtdurchmessern als Beschleunigungsspulenwicklungen vorgesehen sind, insbesondere zum beschleunigten Lüften der Bremse oder Kupplung.

4. Spule (11, 12) nach mindestens einem der vorangegangenen Ansprüche,
**dadurch gekennzeichnet, dass**
die Teilwicklung mit dem geringsten Wicklungsdrahtdurchmesser als Haltespule vorgesehen ist, insbesondere zum Aufrechterhalten des gelüfteten Zustandes der Bremse oder Kupplung,
und/oder dass
die Teilwicklungen auf einem Spulenträger (1), insbesondere gemeinsamen Spulenträger (1), vorgesehen sind,
und/oder dass
jede Teilwicklung aus außen isoliertem Wicklungsdraht hergestellt ist, insbesondere einem zur elektrischen Isolierung lackierten Wicklungsdraht,
und/oder dass
die Teilwicklungen konzentrisch ausgeführt sind,
und/oder dass
zumindest ein Abgriff zumindest ein Kontaktierungselement (2, 2a) umfasst, an dem ein Ende des Wicklungsdrahtes der zugehörigen Teilwicklung und ein Ende eines zugehörigen Anschlussdrahtes (6) verbunden ist,
und/oder dass
zumindest ein erster Abgriff, insbesondere ein Zwischenabgriff, zumindest zwei Kontaktierungselemente (2, 2a) umfasst,
und/oder dass
die zugehörige Teilwicklung erste Teilwicklung und die andere Teilwicklung zweite Teilwicklung ist,
und/oder dass
der Spulenträger (1) zumindest zwei Ausnehmungen umfasst, die zur Aufnahme von Kontaktierungselementen ausgebildet sind
und/oder dass
die Kontaktierungselemente (2, 2a) Widerhaken (22) zum Verbinden mit dem Spulenträger (1) umfassen, insbesondere zum nicht-lösbaren Verbinden
und/oder dass
das Verbindungselement aus Litzendraht hergestellt ist, insbesondere aus isoliertem und/oder dass
der Spulenträger (1) zur erhöhten thermischen Leitfähigkeit mit Vergussmasse vergossen und in einem Gehäuseteil vorgesehen ist.

5. Ansteuerung für eine Bremse oder Kupplung,
umfassend eine Spule (11, 12) nach mindestens einem der vorangegangenen Ansprüche mit mindestens einem Zwischenabgriff, insbesondere Mittelabgriff, und einer elektronische Schaltung,
**dadurch gekennzeichnet, dass**
die elektronische Schaltung Mittel zum zeitlich versetzten Zuschalten der Teilwicklungen umfasst, insbesondere in Reihe,
wobei
eine erste Teilwicklung einen Wicklungsdraht mit erstem Drahtdurchmesser und eine zweite Teilwicklung einen Wicklungsdraht mit einem anderen Drahtdurchmesser umfasst.

6. Ansteuerung nach Anspruch 5,
**dadurch gekennzeichnet, dass**
die elektronische Schaltung elektronische Schalter umfasst, wobei zumindest ein erster Schalter den Strom in einer ersten Teilwicklung bestimmt und ein zweiter Schalter in einer zweiten, insbesondere die Schalter zum Schalten verschieden großer Ströme ausgelegt sind
oder dass
die elektronische Schaltung Mittel zum Erfassen von Strom und/oder Spannung an mindestens einer Teilwicklung und/oder an der gesamten Spule (11, 12) umfasst.

7. Ansteuerung nach Anspruch 5 oder 6,
**dadurch gekennzeichnet, dass**
die elektronische Schaltung Mittel zum Erkennen des Lüftens eines axial beweglichen Elements, insbesondere Ankerscheibe, umfasst,
und/oder dass
die Mittel zum Erkennen des Lüftens Mittel zur Stromerfassung und Mittel zur Auswertung des Stromverlaufs umfassen,
und/oder dass
die elektronische Schaltung Mittel zum Bestimmen des Verschleißes des Bremsbelags und/oder Kupplungsbelags umfasst,
und/oder dass
die Mittel zum Bestimmen des Verschleißes Mittel zum Bestimmen der Induktivität der Spule (11, 12) umfassen,
und/oder dass
die elektronische Schaltung Mittel zum Anzeigen des Verschleißzustandes und/oder Verschleißes umfasst und/oder Mittel zum Übermitteln einer entsprechenden Information an weitere Vorrichtungen, insbesondere an über ein elektronisches Bussystem verbundene Vorrichtungen.

8. Zusammenbau eines Abgriffs und einer Spule (11, 12) nach mindestens einem der vorangegangenen Ansprüche, umfassend mindestens zwei Teilwicklungen,
**dadurch gekennzeichnet, dass**
eine erste Teilwicklung einen Wicklungsdraht mit erstem Drahtdurchmesser und eine zweite Teilwicklung einen Wicklungsdraht mit einem anderen Drahtdurchmesser umfasst,
wobei ein erstes Kontaktierungselement (2, 2a) mit dem Wicklungsdraht der ersten Teilwicklung elektrisch verbunden ist,
und ein zweites Kontaktierungselement (2, 2a) mit dem Wicklungsdraht der zweiten Teilwicklung elektrisch verbunden ist,
wobei die Kontaktierungselemente (2, 2a) elektrisch verbunden sind,
wobei der Abgriff ein erstes Kontaktierungselement (2, 2a) umfasst, an dem ein Ende des Wicklungsdrahtes der zugehörigen Teilwicklung und ein Ende eines zugehörigen Anschlussdrahtes (6) und ein Ende eines aus Litzendraht hergestelltem Verbindungsdrahtes (5) verbunden ist,
wobei der Abgriff ein zweites Kontaktierungselement (2, 2a) umfasst, an dem ein anderes Ende des Verbindungsdrahtes (5) und ein Ende des Wicklungsdrahtes einer anderen Teilwicklung verbunden ist.

9. Abgriff für eine Spule (11, 12) nach Anspruch 8,
**dadurch gekennzeichnet, dass**
zumindest eine Teilwicklung als Vorwiderstand für einen Schalter der Steuerelektronik schaltbar ist,
und/oder dass
eine Zugentlastung durch Anklemmen des den Anschlussdraht (6) umfassenden Kabels an einem elastisch verformbaren Bereich des zugehörigen oder eines zusätzlichen Kontaktierungselements vorgesehen ist.

10. Verfahren zur Herstellung einer Spule (11, 12) nach mindestens einem der vorangegangenen Ansprüche,
**dadurch gekennzeichnet, dass**
- in einem ersten Schritt die Kontaktierungselemente (2, 2a) mit Anschlussdrähten und Verbindungselementen vorkonfektioniert werden;
- in einem zweiten Schritt die Kontaktierungselemente (2, 2a) in den Spulenträger (1) eingefügt werden;
- in einem dritten Schritt die Spulenteilwicklungen auf den Spulenträger (1) gewickelt werden;
- in einem vierten Schritt die Enden der Wicklungsdrähte mit den Kontaktierungselementen verbunden werden, insbesondere verschweißt;
- in einem fünften Schritt die Anschlussdrähte als Kabelstrang aus der Spule (11, 12) herausgeführt werden,
wobei
eine erste Teilwicklung der Spule (11, 12) einen Wicklungsdraht mit erstem Drahtdurchmesser und
eine zweite Teilwicklung der Spule (11, 12) einen Wicklungsdraht mit einem anderen Drahtdurchmesser
umfasst,
wobei ein erster Abgriff der Spule (11, 12) ein erstes Kontaktierungselement (2, 2a) umfasst, an dem ein Ende des Wicklungsdrahtes der zugehörigen Teilwicklung und ein Ende eines zugehörigen Anschlussdrahtes (6) und ein Ende eines aus Litzendraht hergestelltem Verbindungsdrahtes (5) verbunden wird,
wobei der erste Abgriff ein zweites Kontaktierungselement (2, 2a) umfasst, an dem ein anderes Ende des Verbindungsdrahtes (5) und ein Ende des Wicklungsdrahtes einer anderen Teilwicklung verbunden wird.

11. Verfahren nach Anspruch 10,
**dadurch gekennzeichnet, dass**
im zweiten Schritt ein Einschieben des Kontaktierungselementes in den Spulenträger (1) auf eine erste Einschubtiefe und
nach dem vierten Schritt, insbesondere nach dem vierten Schritt und vor dem fünften Schritt, ein Einschieben des Kontaktierungselementes in den Spulenträger (1) auf eine zweite Einschubtiefe und
wobei die zweite Einschubtiefe die erste wertmäßig übertrifft,
und/oder dass
im zweiten Schritt zumindest zwei durch ein Verbindungselement miteinander verbundene Kontaktierungselemente (2, 2a) in den Spulenträger (1) eingefügt werden, wobei eines der Kontaktierungselemente (2, 2a) mit einem Anschlussdraht (6) vorkonfektioniert ist.

12. Elektromagnetisch betätigbare Bremse oder Kupplung,
**dadurch gekennzeichnet, dass**
als Brems- oder Kupplungsspule eine Spule (11, 12) nach einem der Ansprüche 1 bis 4 ausgeführt ist, wobei die Teilwicklungen mit verschieden großen Strömen beaufschlagbar sind.

13. Antrieb, umfassend Elektromotor,
**dadurch gekennzeichnet, dass**
eine Spule (11, 12) nach einem der vorangegangenen Ansprüche 1 bis 4 umfasst ist, insbesondere wobei die Wärme der Lüftspule über ein Lagerschild oder Gehäuseteil des Motors an die Umgebung abgeführt wird,
oder dass
die Bremse im Elektromotor integriert vorgesehen ist.

## Claims

1. A coil (11, 12), in particular for an electromagnetically actuable brake or clutch, wherein the coil (11, 12) comprises two or more part windings (11, 12) and associated taps,
wherein a first part winding (11) comprises a winding wire with a first wire diameter and a second part winding (12) comprises a winding wire with another wire diameter,
**characterised in that**
a first tap (2, 2a) comprises a first contacting element (2a) to which an end of the winding wire (10) of the associated part winding (2) and an end of an associated connection wire (6) and an end of a connecting wire (5) manufactured from stranded wire is connected,
wherein the first tap (2, 2a) comprises a second contacting element (2) to which another end of the connecting wire (5) and an end of the winding wire (9) of another part winding (11) is connected.

2. A coil (11, 12) according to Claim 1,
**characterised in that**
the part windings may be switched on in staggered succession via control electronics.

3. A coil (11, 12) according to at least one of the preceding claims,
**characterised in that**
part windings with the larger winding wire diameters are provided as acceleration coil windings, in particular for the accelerated release of the brake or clutch.

4. A coil (11, 12) according to at least one of the preceding claims,
**characterised in that**
the part winding with the smallest winding wire diameter is provided as a holding coil, in particular for maintaining the released state of the brake or clutch,
and/or **in that**
the part windings are provided on a coil carrier (1), in particular a common coil carrier (1),
and/or **in that**
each part winding is manufactured from externally insulated winding wire, in particular a winding wire coated for electrical insulation,
and/or **in that**
the part windings are designed to be concentric, and/or **in that**
at least one tap comprises at least one contacting element (2, 2a) to which an end of the winding wire of the associated part winding and an end of an associated connection wire (6) is connected, and/or **in that**
at least a first tap, in particular an intermediate tap, comprises at least two contacting elements (2, 2a),
and/or **in that**
the associated part winding is a first part winding and the other part winding is a second part winding, and/or **in that**
the coil carrier (1) comprises at least two recesses which are designed to receive contacting elements, and/or **in that**
the contacting elements (2, 2a) comprise barbs (22) for connection to the coil carrier (1), in particular for non-releasable connection,
and/or **in that**
the connecting element is manufactured from stranded wire, in particular from insulated stranded wire, and/or **in that** the coil carrier (1) is cast with a casting compound for increased thermal conductivity and is provided in a housing part.

5. A control for a brake or clutch,
comprising a coil (11, 12) according to at least one of the preceding claims, having at least one intermediate tap, in particular a centre tap, and an electronic circuit,
**characterised in that**
the electronic circuit comprises means for switching on the part windings in staggered manner, in particular in series,
wherein a first part winding comprises a winding wire with a first wire diameter and a second part winding comprises a winding wire with another wire diameter.

6. A control according to Claim 5,
**characterised in that**
the electronic circuit comprises electronic switches, wherein at least a first switch determines the current in a first part winding and a second switch determines the current in a second part winding, in particular the switches are designed for switching currents of different magnitudes,
or **in that**
the electronic circuit comprises means for detecting current and/or voltage across at least one part winding and/or across the entire coil (11, 12).

7. A control according to Claim 5 or 6,
**characterised in that**
the electronic circuit comprises means for detecting the release of an axially movable element, in particular an armature plate,
and/or **in that**
the means for detecting the release comprise means for recording current and means for evaluating the current characteristic,
and/or **in that**
the electronic circuit comprises means for determining the wear on the brake lining and/or clutch lining, and/or **in that**
the means for determining the wear comprise means for determining the inductance of the coil (11, 12), and/or **in that**
the electronic circuit comprises means for displaying the wear status and/or wear and/or means for transmitting corresponding information to further devices, in particular to devices connected via an electronic bus system.

8. An assembly of a tap and a coil (11, 12) according to at least one of the preceding claims, comprising at least two part windings, **characterised in that** a first part winding comprises a winding wire with a first wire diameter and a second part winding comprises a winding wire with another wire diameter, wherein a first contacting element (2, 2a) is electrically connected to the winding wire of the first part winding,
and a second contacting element (2, 2a) is electrically connected to the winding wire of the second part winding,
wherein the contacting elements (2, 2a) are electrically connected,
wherein the tap comprises a first contacting element (2, 2a) to which an end of the winding wire of the associated part winding and an end of an associated connection wire (6) and an end of a connecting wire (5) manufactured from stranded wire is connected, wherein the tap comprises a second contacting element (2, 2a) to which another end of the connecting wire (5) and an end of the winding wire of another part winding are connected.

9. A tap for a coil (11, 12) according to Claim 8,
**characterised in that**
at least one part winding may be connected as a series resistor for a switch of the control electronics, and/or **in that**
strain relief is provided by clamping the cable comprising the connection wire (6) to a resiliently deformable region of the associated contacting element or an additional contacting element.

10. A process for manufacturing a coil (11, 12) according to at least one of the preceding claims,
**characterised in that**
- in a first step, the contacting elements (2, 2a) are prefabricated with connection wires and connecting elements;
- in a second step, the contacting elements (2, 2a) are introduced into the coil carrier (1);
- in a third step, the coil part windings are wound onto the coil carrier (1);
- in a fourth step, the ends of the winding wires are connected, in particular welded, to the contacting elements;
- in a fifth step, the connection wires are led out of the coil (11, 12) as a cable harness,
wherein
a first part winding of the coil (11, 12) comprises a winding wire with a first wire diameter and
a second part winding of the coil (11, 12) comprises a winding wire with another wire diameter,
wherein a first tap of the coil (11, 12) comprises a first contacting element (2, 2a) to which an end of the winding wire of the associated part winding and an end of an associated connection wire (6) and an end of a connecting wire (5) manufactured from stranded wire is connected,
wherein the first tap comprises a second contacting element (2, 2a) to which another end of the connecting wire (5) and an end of the winding wire of another part winding are connected.

11. A process according to Claim 10,
**characterised in that**
in the second step, the contacting element is inserted into the coil carrier (1) to a first insertion depth and
after the fourth step, in particular after the fourth step and before the fifth step, the contacting element is inserted into the coil carrier (1) to a second insertion depth and
wherein the second insertion depth exceeds the first in terms of value,
and/or **in that**
in the second step, at least two contacting elements (2, 2a) connected to one another by a connecting element are introduced into the coil carrier (1), wherein one of the contacting elements (2, 2a) is prefabricated with a connection wire (6).

12. An electromagnetically actuable brake or clutch,
**characterised in that**
a coil (11, 12) according to one of Claims 1 to 4 is designed as a brake or clutch coil, wherein the part windings may be acted upon by currents of different magnitudes.

13. A drive comprising an electric motor,
**characterised in that**
a coil (11, 12) according to one of the preceding claims 1 to 4 is included, in particular wherein the heat of the release coil is discharged to the environment via an end shield or housing part of the motor,
or **in that**
the brake is provided to be integrated in the electric motor.

## Revendications

1. Bobine (11, 12) notamment destinée à un frein ou à un accouplement actionnable électromagnétiquement,
ladite bobine (11, 12) comprenant des enroulements partiels (11, 12) au nombre de deux ou plus, et des prises associées,
un premier enroulement partiel (11) incluant un fil de bobinage présentant un premier diamètre et
un second enroulement partiel (12) incluant un fil de bobinage présentant un diamètre autre,
**caractérisée par le fait**
**qu'**une première prise (2, 2a) comporte un premier élément (2a) de mise en contact, auquel sont raccordées une extrémité du fil de bobinage (10) de l'enroulement partiel (12) associé, une extrémité d'un fil de connexion (6) associé, et une extrémité d'un fil de jonction (5) fabriqué en fil métallique torsadé,
ladite première prise (2, 2a) comportant un second élément (2) de mise en contact, auquel sont raccordées une autre extrémité dudit fil de jonction (5) et une extrémité du fil de bobinage (9) d'un autre enroulement partiel (11).

2. Bobine (11, 12) selon la revendication 1,
**caractérisée par le fait que**
les enroulements partiels peuvent être successivement mis en circuit avec décalage dans le temps, par l'intermédiaire d'une électronique de commande.

3. Bobine (11, 12) selon au moins l'une des revendications précédentes,
**caractérisée par le fait que**
des enroulements partiels, dont les fils de bobinage présentent les diamètres supérieurs, sont prévus en tant qu'enroulements de bobines d'accélération, notamment en vue du désaérage accéléré du frein ou de l'accouplement.

4. Bobine (11, 12) selon au moins l'une des revendications précédentes,
**caractérisée par le fait que**
l'enroulement partiel, dont le fil de bobinage présente le diamètre le plus faible, est prévu en tant que bobine de maintien, notamment en vue d'entretenir l'état désaéré du frein ou de l'accouplement ;
et/ou que
les enroulements partiels sont prévus sur un porte-bobine (1), en particulier un porte-bobine (1) commun ;
et/ou que
chaque enroulement partiel est fabriqué en un fil de bobinage isolé extérieurement, notamment en un fil de bobinage laqué en vue de l'isolation électrique ;
et/ou que
les enroulements partiels sont de réalisation concentrique ;
et/ou
qu'au moins une prise comporte au moins un élément (2, 2a) de mise en contact auquel sont raccordées une extrémité du fil de bobinage de l'enroulement partiel associé, et une extrémité d'un fil de connexion (6) associé ;
et/ou
qu'au moins une première prise, en particulier une prise intermédiaire, compte au moins deux éléments (2, 2a) de mise en contact ;
et/ou que
l'enroulement partiel associé est un premier enroulement partiel, et l'autre enroulement partiel est un second enroulement partiel ;
et/ou que
le porte-bobine (1) comprend au moins deux évidements conçus pour recevoir des éléments de mise en contact ;
et/ou que
lesdits éléments (2, 2a) de mise en contact sont munis d'ardillons (22) destinés à la liaison avec ledit porte-bobine (1), en particulier à la liaison non libérable ;
et/ou que
l'élément de liaison est fabriqué en fil métallique torsadé, notamment isolé ;
et/ou que
ledit porte-bobine (1) est scellé à l'aide d'une masse de scellement et est prévu dans une partie formant carter, en vue de la conductivité thermique accrue.

5. Système de pilotage destiné à un frein ou à un accouplement,
équipé d'une bobine (11, 12) conforme à au moins l'une des revendications précédentes et comprenant au moins une prise intermédiaire, en particulier une prise centrale, et un circuit électronique,
**caractérisé par le fait que**
le circuit électronique comporte des moyens dévolus à la mise en circuit des enroulements partiels, notamment en série, avec décalage dans le temps,
sachant
qu'un premier enroulement partiel inclut un fil de bobinage présentant un premier diamètre et
qu'un second enroulement partiel inclut un fil de bobinage présentant un diamètre autre.

6. Système de pilotage selon la revendication 5,
**caractérisé par le fait que**
le circuit électronique inclut des commutateurs électroniques, sachant qu'au moins un premier commutateur détermine le courant circulant dans un premier enroulement partiel, et qu'un second commutateur assure cette détermination dans un second enroulement, lesdits commutateurs étant notamment réalisés pour commuter des courants d'intensités différentes ;
ou que
ledit circuit électronique inclut des moyens réalisés pour détecter un courant et/ou une tension appliqué(e)(s) à au moins un enroulement partiel et/ou à l'intégralité de la bobine (11, 12).

7. Système de pilotage selon la revendication 5 ou 6,
**caractérisé par le fait que**
le circuit électronique inclut des moyens réalisés pour repérer le désaérage d'un élément mobile axialement, en particulier d'un disque d'induit ;
et/ou que
lesdits moyens, affectés au repérage du désaérage, comprennent des moyens dévolus à la détection du courant et des moyens dévolus à l'évaluation de l'allure du courant ;
et/ou que
ledit circuit électronique inclut des moyens réalisés pour déterminer l'usure de la garniture du frein et/ou de la garniture de l'accouplement ;
et/ou que
lesdits moyens, affectés à la détermination de l'usure, comprennent des moyens dévolus à la détermination de l'inductance de la bobine (11, 12) ;
et/ou que
ledit circuit électronique inclut des moyens réalisés pour visualiser l'état d'usure et/ou l'usure, et/ou des moyens réalisés pour transmettre une information correspondante à des dispositifs additionnels, en particulier à des dispositifs connectés par l'intermédiaire d'un système de bus électronique.

8. Ensemble combiné d'une prise et d'une bobine (11, 12) conforme à au moins l'une des revendications précédentes, comportant au moins deux enroulements partiels,
**caractérisé par le fait**
**qu'**un premier enroulement partiel inclut un fil de bobinage présentant un premier diamètre et
un second enroulement partiel inclut un fil de bobinage présentant un diamètre autre, sachant qu'un premier élément (2, 2a) de mise en contact est raccordé électriquement au fil de bobinage dudit premier enroulement partiel
et **qu'**un second élément (2, 2a) de mise en contact est raccordé électriquement au fil de bobinage dudit second enroulement partiel,
lesdits éléments (2, 2a) de mise en contact étant connectés électriquement,
sachant que la prise comporte un premier élément (2, 2a) de mise en contact, auquel sont raccordées une extrémité du fil de bobinage de l'enroulement partiel associé, une extrémité d'un fil de connexion (6) associé, et une extrémité d'un fil de jonction (5) fabriqué en fil métallique torsadé,
ladite prise comportant un second élément (2, 2a) de mise en contact, auquel sont raccordées une autre extrémité dudit fil de jonction (5) et une extrémité du fil de bobinage d'un autre enroulement partiel.

9. Prise destinée à une bobine (11, 12) conforme à la revendication 8, **caractérisée par le fait**
**qu'**au moins un enroulement partiel peut être branché en tant que résistance série affectée à un commutateur de l'électronique de commande ;
et/ou
**qu'**il est prévu un soulagement en traction s'opérant par serrage du câble, incluant le fil de connexion (6), sur une région élastiquement déformable de l'élément associé de mise en contact, ou d'un élément supplémentaire de ce type.

10. Procédé de fabrication d'une bobine (11, 12) conforme à au moins l'une des revendications précédentes,
**caractérisé par le fait que**,
- lors d'une première étape, les éléments (2, 2a) de mise en contact sont préfabriqués en incluant des fils de connexion et des éléments de liaison ;
- lors d'une deuxième étape, lesdits éléments (2, 2a) de mise en contact sont intégrés dans le porte-bobine (1) ;
- lors d'une troisième étape, les enroulements partiels de la bobine sont enroulés sur ledit porte-bobine (1) ;
- lors d'une quatrième étape, les extrémités des fils de bobinage sont raccordées, notamment soudées auxdits éléments de mise en contact ;
- lors d'une cinquième étape, lesdits fils de connexion sont extraits de ladite bobine (11, 12) en tant que brin de câblage,
sachant
qu'un premier enroulement partiel de la bobine (11, 12) inclut un fil de bobinage présentant un premier diamètre et
un second enroulement partiel de ladite bobine (11, 12) inclut un fil de bobinage présentant un diamètre autre,
une première prise de ladite bobine (11, 12) comportant un premier élément (2, 2a) de mise en contact, auquel sont raccordées une extrémité du fil de bobinage de l'enroulement partiel associé, une extrémité d'un fil de connexion (6) associé, et une extrémité d'un fil de jonction (5) fabriqué en fil métallique torsadé,
ladite première prise comportant un second élément (2, 2a) de mise en contact, auquel sont raccordées une autre extrémité dudit fil de jonction (5) et une extrémité du fil de bobinage d'un autre enroulement partiel.

11. Procédé selon la revendication 10,
**caractérisé par le fait que**,
lors de la deuxième étape, l'élément de mise en contact est inséré dans le porte-bobine (1) jusqu'à une première profondeur d'insertion et,
à l'issue de la quatrième étape, en particulier après ladite quatrième étape et avant la cinquième étape, ledit élément de mise en contact est inséré dans ledit porte-bobine (1) jusqu'à une seconde profondeur d'insertion,
la valeur de ladite seconde profondeur d'insertion étant supérieure à celle de la première ; et/ou que,
lors de ladite deuxième étape, au moins deux éléments (2, 2a) de mise en contact, reliés l'un à l'autre par l'intermédiaire d'un élément de liaison, sont insérés dans ledit porte-bobine (1), l'un desdits éléments (2, 2a) de mise en contact étant préfabriqué en incluant un fil de connexion (6).

12. Frein ou accouplement actionnable électromagnétiquement,
**caractérisé par le fait**
**qu'**une bobine du frein ou de l'accouplement se présente comme une bobine (11, 12) réalisée conformément à l'une des revendications 1 à 4, les enroulements partiels pouvant être sollicités par des courants d'intensités différentes.

13. Entraînement comprenant un moteur électrique,
**caractérisé par le fait**
**qu'**il inclut une bobine (11, 12) conforme à l'une des revendications 1 à 4 précédentes, sachant notamment que la chaleur de la bobine de désaérage est cédée à l'espace environnant par l'intermédiaire d'un bouclier de palier, ou d'une partie formant carter du moteur ;
ou qu'il soit prévu que
le frein soit intégrer dans le moteur électrique.
